# EUROPEAN PATENT APPLICATION

(11) **EP 2 784 299 A1**
(43) Date of publication of application: **01.10.2014**
(21) Application number: 14161635.9
(22) Date of filing: 26.03.2014
(51) Int. Cl.: F02M 37/22, B01D 19/00, B01D 61/00, B64D 37/34, F02M 31/16

(54) **Diesel fuel stabilization for enhanced combustion**

(30) Priority: 27.03.2013 US 201313851713
(71) Applicant: Hamilton Sundstrand Corporation, Windsor Locks, CT 06096-1010 (US)
(72) Inventor: Cordatos, Haralambos, Colchester, CT Connecticut 06415 (US); Colket III, Meredith B., Avon, CT Connecticut 06001 (US)
(74) Representative: Leckey, David Herbert

(57) **Abstract**

A fuel system is provided including a diesel fuel reservoir (44) configured to supply a diesel fuel having a first amount of dissolved oxygen. A diesel engine (42) is arranged generally downstream from the diesel fuel reservoir (44). A deoxygenation system (20) has an inlet (28) fluidly coupled to the diesel fuel reservoir (44) and an outlet (30) fluidly coupled to the advanced diesel engine (42). The deoxygenation system (20) is configured to remove dissolved oxygen from the diesel fuel. The diesel fuel provided to the advanced diesel engine (42) has a second amount of dissolved oxygen. The second amount of dissolved oxygen is less than the first amount of dissolved oxygen.

## Description

### BACKGROUND OF THE INVENTION

Exemplary embodiments disclosed herein generally relate to diesel engines, and more particularly, to deoxygenation of a diesel fuel configured for use in a diesel engine.

Recent advancements in injector technology are responsible for improvements in emissions and power density of diesel engine systems. Such advancements have been achieved through a combination of reduced nozzle orifice diameters, reduced cavitation, and increased temperatures at the nozzle tip.

Carbonatious deposits are common in diesel engine systems, and particularly in advanced diesel systems operating at high temperatures, because increased temperatures accelerate the formation of such deposits. As a result of the reduction in the diameter of the nozzle orifice, the effect of the carbonatious deposits is even more pronounced. Additionally, the reduced cavitation in advanced diesel engine systems minimizes the self-cleaning mechanism that prevents blockages from obstructing the passages in the nozzle, such that the power output of the advanced diesel engine system will significantly decrease over time. Carbonatious deposits may also form within the injector body, such as in the armature, the piston and nozzle needle, or inside the nozzle body for example. Therefore, the improvements in advanced diesel engine technology and the increased utilization of alternative, bio-fuels have, unfortunately, resulted in an increased propensity for carbonatious formation, and an increased susceptibility to problems resulting from the formation of such deposits.

### BRIEF DESCRIPTION OF THE INVENTION

According to one embodiment of the invention, a fuel system is provided including a diesel fuel reservoir configured to supply a diesel fuel having a first amount of dissolved oxygen. An adjacent diesel engine is arranged generally downstream from the diesel fuel reservoir. A deoxygenation system has an inlet fluidly coupled to the diesel fuel reservoir and an outlet fluidly coupled to the advanced diesel engine. The deoxygenation system is configured to remove dissolved oxygen from the diesel fuel. The diesel fuel provided to the advanced diesel engine has a second amount of dissolved oxygen. The second amount of dissolved oxygen is less than the first amount of dissolved oxygen.

According to another embodiment, a fuel system for a marine vessel is provided including at least one collecting tank configured to store diesel fuel containing a first amount of dissolved water, a first amount of non-miscible water, and a first amount of dissolved oxygen. A diesel fuel reservoir is arranged generally downstream from the at least one collecting tank. The diesel fuel reservoir is configured to store a diesel fuel having a first amount of dissolved oxygen, a first amount of dissolved water, and a second amount of non-miscible water. A purifier is fluidly coupled to the at least one collecting tank and the diesel fuel reservoir. The purifier is configured to remove non-miscible water from the diesel fuel. An advanced diesel engine is arranged generally downstream from the diesel fuel reservoir. A deoxygenation system has an inlet fluidly coupled to the diesel fuel reservoir and an outlet fluidly coupled to the advanced diesel engine. The deoxygenation system is configured to remove dissolved oxygen from the diesel fuel. The diesel fuel provided to the advanced diesel engine has a second amount of dissolved oxygen. The second amount of dissolved oxygen is less than the first amount of dissolved oxygen.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a perspective view of an exemplary fuel deoxygenation system;
FIG. 2 is a cross-section of the exemplary fuel deoxygenation system illustrated in FIG. 1;
FIG. 3 is a schematic diagram of a fuel system associated with an energy conversion device according to an embodiment of the invention;
FIG. 4 is a schematic diagram of another fuel system associated with an energy conversion device according to an embodiment of the invention; and
FIG. 5 is a schematic diagram of yet another fuel system associated with an energy conversion device according to an embodiment of the invention.

The detailed description explains embodiments of the invention, together with advantages and features, by way of example with reference to the drawings.

### DETAILED DESCRIPTION OF THE INVENTION

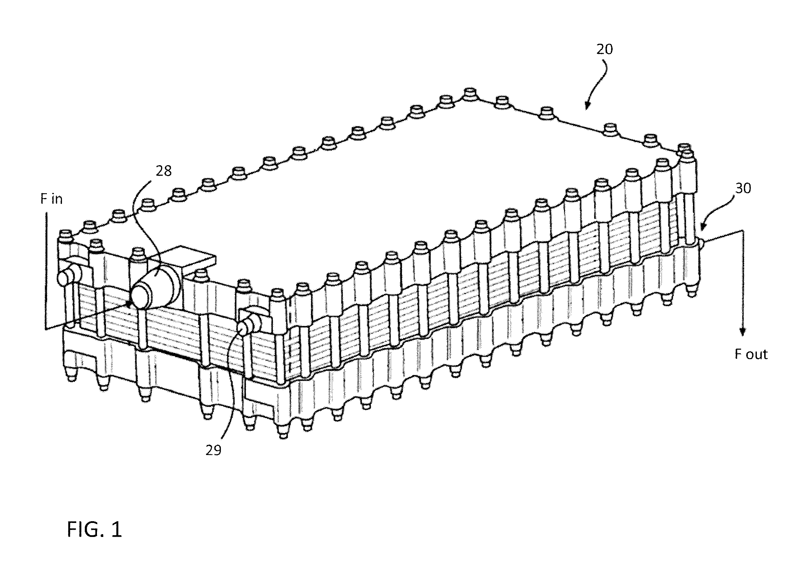

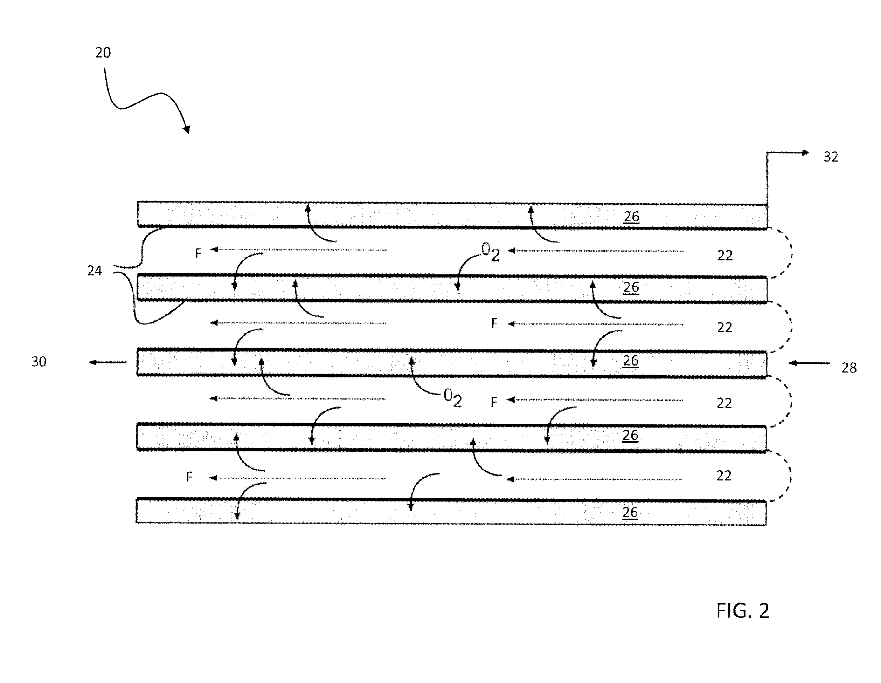

An exemplary deoxygenation system 20 configured to remove oxygen from a fuel F flowing through the deoxygenation system 20 is schematically illustrated in FIGS. 1 and 2. The deoxygenation system 20 includes one or more fuel channels 22 that include permeable membranes 24 and oxygen receiving channels 26. The fuel channels 22 are fluidly connected between a fuel inlet 28 and a fuel outlet 30 of the deoxygenation system 20. Though the illustrated fuel channels 22 are substantially rectangular, it should be understood that fuel channels 22 of various shapes and arrangements are within the scope of the invention.

The permeable membrane 24 allows primarily dissolved oxygen and not larger fuel molecules, to diffuse through openings, such as voids or pores for example. Alternatively, or in conjunction with the openings, the permeable membrane 24 may utilize a solution-diffusion mechanism to dissolve and diffuse primarily oxygen through the membrane 24 while excluding the fuel F. The family of Teflon^{™} AF, which is an amorphous copolymer of perfluoro-2, 2-dimethyl-1, 3-dioxole (PDD) often identified under the trademark "Teflon^{™} AF" registered to E. I. Dupont de Nemours of Wilmington, Del., and the family of HYFLON^{™} AD which is a copolymer of 2, 2, 4-trifluoro-5-trifluoromethoxy-1, 3-dioxole (TTD) registered to Solvay Solexis, Milan, Italy have proven to provide effective results for fuel deoxygenation. The Teflon^{™} AF 2400 and/or Teflon^{™} AF 1600 material is believed to use a solution-diffusion mechanism. Given this description, one of ordinary skill in the art will recognize other types of fluoropolymers or other polymer materials suitable for their needs as a permeable membrane 24.

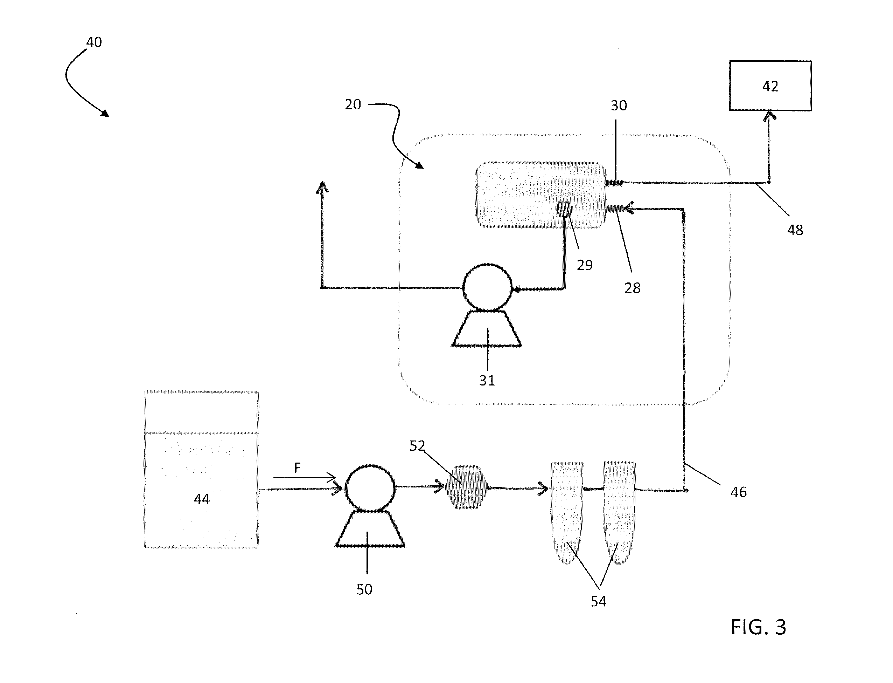

Fuel F having naturally dissolved oxygen is provided to the inlet 28 of the deoxygenation system 20, and oxygen-depleted fuel F is discharged from the outlet 30 of the deoxygenation system 20. A vacuum port 29 is in communication with the permeable membrane 24. The fuel F flowing through the fuel channels 22 is in contact with the permeable membrane 24. A vacuum 31 (see FIG. 3) coupled to the vacuum port 29 creates a partial pressure differential across the permeable membrane 24 thereby causing dissolved oxygen within the fuel F to transfer through the membrane 24 and into the receiving channel 26. Alternatively, the same partial pressure differential may be created by sweep gas configured to constantly remove the oxygen and/or water in the receiving channel 26.

In one embodiment, the permeable membrane 24 allows dissolved water within the fuel F, in addition to dissolved oxygen, to diffuse through the openings of the membrane 24. In such embodiments, the partial pressure differential created across the membrane 24 by the vacuum 31 causes dissolved water and dissolved oxygen to migrate through the membrane and into the receiving channels 26 of the deoxygenation system 20.

The quantity of fuel channels 22 arranged within the deoxygenation system 20 is generally determined based on application-specific requirements, such as fuel type, fuel temperature, and mass flow demand for example. The configuration of the one or more fuel channels 22 within the deoxygenation system 20 may be designed to maximize exposure of the fuel F to the permeable membrane 24 to increase the amount of dissolved oxygen and/or dissolved water removed from the fuel F. In one embodiment, the surface area of the permeable membrane 24 is increased. In another embodiment, an active area of the permeable membrane 24 is exposed to a flow region where a dissolved oxygen or a dissolved water concentration is relatively high. In yet another embodiment, the fuel flow is mixed as it travels through the fuel channels 22. The deoxygenation system 20 described herein is exemplary, and other suitable deoxygenation systems configured to reduce the amount of dissolved oxygen in a fuel F flowing there through are within the scope of the invention.

Different fuels containing different amounts of dissolved oxygen may require different amounts of deoxygenation to remove a desired amount of dissolved oxygen. In one embodiment, the fuel F flowing through the fuel channels 22 of the deoxygenation system 20 is a diesel fuel configured for use in an advanced diesel engine. In general, advanced diesel engines employ high-pressure "common rail" injection technology which provides better fuel atomization, and therefore, improved emissions control. Exemplary diesel fuels that may be used in conjunction with advanced diesel engines include petroleum-derived diesel, bio-derived diesel, and any other suitable fuel known to a person having ordinary skill in the art.

Referring now to FIGS. 3-5, a fuel system 40 configured to supply fuel F to an energy conversion device 42, such as an advanced diesel engine for example, is illustrated. Advanced diesel engines may be used in any number of applications, including, but not limited to, machinery, boats, tractors, generators, and on-road or off-road vehicles for example. The fuel system 40 includes a diesel fuel reservoir 44 arranged generally upstream from and operably coupled to the inlet 28 of the deoxygenation system 20 with a first conduit 46. The outlet 30 of the deoxygenation system 20 is connected to the energy conversion device 42 by a second conduit 48. A pump 50 is configured to draw fuel F from the fuel reservoir 44. Though the pump 50 is illustrated as being positioned generally between the fuel reservoir 44 and the deoxygenation system 20 in the FIGS., a person having ordinary skill in the art will recognize that the pump 50 may be located elsewhere without affecting the functionality of the system 40. The pressure generated by the pump 50 assists in circulating the diesel fuel F through the deoxygenation system 20 and other portions of the fuel system 40. In one embodiment, a strainer 52 and/or at least one filter 54 may be arranged generally downstream from the fuel reservoir 44, such as within conduit 46 for example. The strainer 52 and/or filter 54 remove debris particles equal to or greater than a predetermined size from the fuel flow. In one embodiment, the strainer 52 is configured to remove particles generally larger than a first size, and the one or more filters 54 are configured to remove particles generally larger than a second, smaller size.

In one embodiment, a strainer 52 and/or at least one filter 54 may be arranged generally downstream from the fuel reservoir 44, such as within conduit 46 for example. The strainer 52 and/or filter 54 remove debris particles equal to or greater than a predetermined size from the fuel flow. In one embodiment, the strainer 52 is configured to remove particles generally larger than a first size, and the one or more filters 54 are configured to remove particles generally larger than a second, smaller size.

As generally understood, the diesel fuel F stored within the fuel reservoir 44 is saturated with dissolved oxygen, for example at a level of approximately 70 ppm. The fuel pump 50 communicates with the reservoir 44, such as through a valve (not shown) for example, to supply fuel F to the inlet 28 of the deoxygenation system 20. As the fuel F passes through the deoxygenation system 20, oxygen is removed from the fuel using a vacuum 31 or sweep gas. The size and number of fuel channels 22 can be adjusted to remove the desired amount of dissolved oxygen depending on application needs. In one embodiment, the deoxygenation system 20 is sized for a minimum of 20% deoxygenation to a maximum of 90% deoxygenation, relative to the initial 70 ppm level of dissolved oxygen. The deoxygenated fuel F flows through the second conduit 48, from the outlet 30 of the deoxygenation system 20 to the energy conversion device 42, such as the fuel injector of an advance diesel engine. It should be understood that although a particular arrangement is disclosed in the illustrated embodiment, other arrangements are within the scope of the invention.

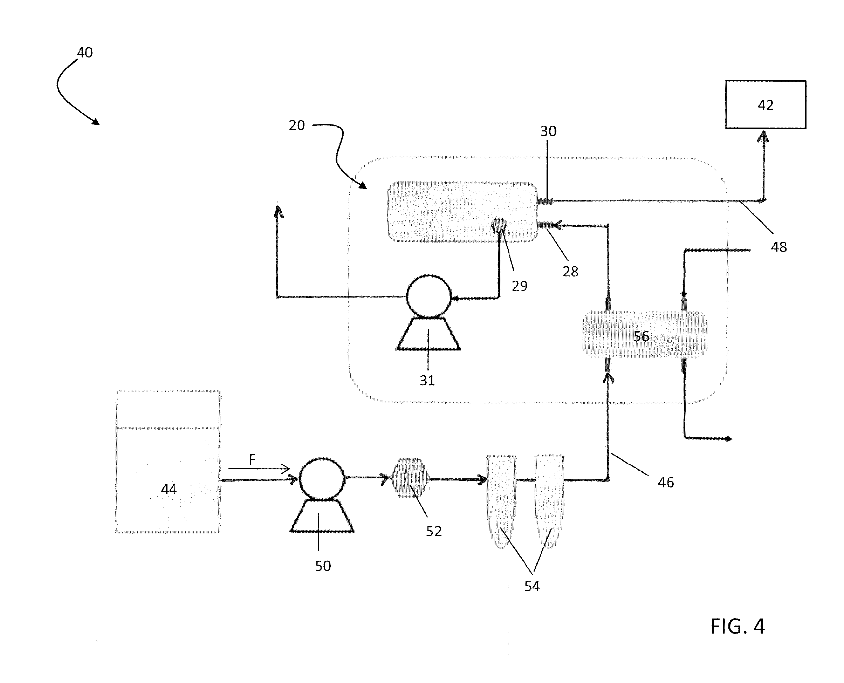

Referring now to FIG. 4, a heat exchanger 56 may be positioned generally between the deoxygenation system 20 and the fuel reservoir 44 relative to the flow of fuel F through the system 40. As the fuel F flows through the heat exchanger 56, heat transfers from a generally heated medium to the fuel F. In one embodiment, the heated medium includes waste heat from another portion of the system, such as the cooling system (not shown) for the energy conversion device 42. Inclusion of the heat exchanger 56 in the fuel system 40 increases the thermodynamic efficiency of the engine, and additionally may reduce the size of the cooling system for the energy conversion device 42. In addition, by pre-heating the fuel F in the heat exchanger, the viscosity of the fuel F is reduced such that lower quality diesel fuels may be used.

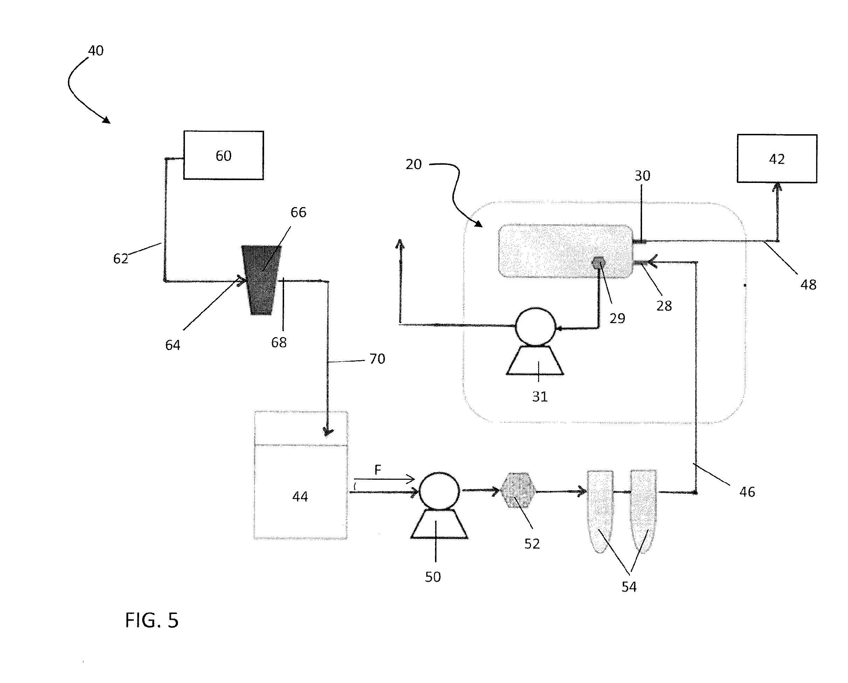

In one non-limiting embodiment, illustrated in FIG. 5, the energy conversion device 42 is a marine diesel engine. As shown, the fuel system 40 configured for used with the marine diesel engine may additionally include one or more collecting tanks 60 arranged upstream from the fuel reservoir 44. A conduit 62 extends from the collecting tank 60 to an inlet 64 of a purifier 66, and another conduit 70 couples the outlet 68 of the purifier 66 to the fuel reservoir 44. In some marine vessels, water, such as sea water for example, may also be stored within the collecting tanks 60 to balance the weight of the vessel. As a result, the fuel F within the collecting tanks 60 may include liquid droplets of sea water as well as some amount of water dissolved within the fuel F. The purifier 66 is configured to remove at least a portion of the non-miscible water entrained within the fuel F as the fuel F. After passing through the purifier, water dissolved within the fuel F remains. In the illustrated non-limiting embodiment, the deoxygenation system 20 includes a membrane 24 permeable to both dissolved water and dissolved oxygen. Therefore, the deoxygenation system 20 works in conjunction with the purifier to limit the amount of non-miscible and dissolved water within the fuel F transferred to the energy conversion device 42.

By decreasing the amount of oxygen in a diesel fuel F before it is provided to an advanced diesel engine, the rate of "auto-oxidation" reactions that cause coking and varnish are substantially reduced. As a result, the thermal stability of the diesel fuel F is improved.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A fuel system comprising:
a diesel fuel reservoir (44) configured to supply a diesel fuel having a first amount of dissolved oxygen;
a diesel engine (42) arranged generally downstream from the diesel fuel reservoir (44); and
a deoxygenation system (20) having an inlet (28) fluidly coupled to the diesel fuel reservoir (44), and an outlet (30) fluidly coupled to the diesel engine (42), wherein the deoxygenation system (20) is configured to remove dissolved oxygen from the diesel fuel such that the diesel fuel provided to the diesel engine (42) has a second amount of dissolved oxygen, the second amount being less than the first amount.

2. The fuel system according to claim 1, wherein the deoxygenation system (20) includes at least one fuel channel (22), at least one receiving channel (26), and a permeable membrane (24) in communication with the at least one fuel channel (22) and the at least one receiving channel (26).

3. The fuel system according to claim 2, wherein a pressure differential created across the permeable membrane (24) causes dissolved oxygen within the diesel fuel in the at least one fuel channel (22) to transfer into the receiving channel.

4. The fuel system according to claim 1, 2 or 3 further comprising a strainer (52) positioned generally downstream from the diesel fuel reservoir (44) and upstream from the inlet (28) of the deoxygenation system (20), the strainer (52) being configured to remove particulate debris from the diesel fuel.

5. The fuel system according to any preceding claim, further comprising a heat exchanger (56) fluidly coupled to the outlet (30) of the deoxygenation system (20) and the diesel engine (42), such that the diesel fuel is heated before being supplied to the diesel engine.

6. The fuel system according to claim 5, wherein waste heat from a cooling system of the diesel engine (42) is supplied to the heat exchanger (56) to heat the diesel fuel therein.

7. The fuel system according to any of claims 2 to 6, wherein the deoxygenation system (20) is also configured to remove dissolved water from the diesel fuel.

8. The fuel system according to claim 7, wherein the deoxygenation system is also configured to remove at least a portion of the dissolved water from the diesel fuel such that the diesel fuel provided to the advanced diesel engine has a second amount of dissolved water, the second amount of dissolved water being less than the first amount of dissolved water.

9. The fuel system according to claim 7 or 8, wherein a pressure differential created across the permeable membrane (24) causes dissolved water within the diesel fuel in the at least one fuel channel (22) to transfer into the receiving channel (26).

10. The fuel system according to any preceding claim, wherein the fuel system is for a marine vessel, further comprising:
at least one collecting tank (60) configured to store diesel fuel containing a first amount of dissolved oxygen, a first amount of dissolved water and a first amount of non-miscible water;
the diesel fuel reservoir (44) configured to store diesel fuel having the first amount of dissolved oxygen, a first amount of dissolved water, and a second amount of non-miscible water; and
a purifier (66) fluidly coupled to the at least one collecting tank (60) and the diesel fuel reservoir (44), the purifier (66) being configured to remove at least a portion of the non-miscible water from the diesel fuel.

11. The fuel system according to any preceding claim , wherein the diesel engine (42) is an advanced diesel engine.
